# FASCICULE DE BREVET EUROPEEN

(11) **EP 1 630 050 B1**
(45) Date de publication et mention de la délivrance du brevet: **24.08.2011**
(21) Numéro de dépôt: 05107866.5
(22) Date de dépôt: 26.08.2005
(51) Int. Cl.: B60R 25/00, G07C 9/00

(54) **Procédé et dispositif d'exploitation d'un système d'accès et/ou démarrage "mains-libres" pour véhicule**
Verfahren und Einrichtung zum Betrieb einer Zugangs- und/oder freihändigen Starteinrichtung für Fahrzeuge
Method and device for operating a hands-free access and/or a hands-free start system for vehicles

(30) Priorité: 30.08.2004 FR 0409199
(43) Date de publication de la demande: 01.03.2006
(73) Titulaire: Valeo Sécurité Habitacle, 94046 Créteil Cedex (FR)
(72) Inventeur: Ranier, Marc, 94042, Créteil (FR); Robineau, José, 94042, Créteil (FR)
(74) Mandataire: Jacquot, Ludovic R. G.

(56) Documents cités:
- EP-A- 1 077 301
- EP-A- 1 394 006
- DE-A1- 10 321 803
- US-A- 5 898 230

## Description

La présente invention concerne un procédé et un dispositif d'exploitation d'un système d'accès et/ou de démarrage « mains-libres » pour véhicule.

Dans l'état de la technique, on connaît des systèmes d'accès à un véhicule qui permettent à son utilisateur d'accéder de manière sûre à l'habitacle et à diverses fonctions du véhicule comme la fonction de démarrage du groupe motopropulseur. Ces systèmes sont qualifiés de systèmes « mains-libres » parce qu'ils mettent en oeuvre au moins un identifiant portatif qui dialogue avec un système de contrôle embarqué, de telle sorte que la plupart des actions initiées par le système d'accès et/ou de démarrage le sont sans que l'utilisateur porteur d'un identifiant portatif ait à saisir une clé sauf, dans certains cas particuliers. Une telle communication entre un identifiant portatif porté par un utilisateur et un système de contrôle embarqué à bord d'un véhicule est réalisée au moyen d'au moins une liaison radiofréquence. Particulièrement dans la suite, le terme d'identifiant sera utilisé pour désigner l'unité de données et/ou de code permettant d'identifier un objet portatif ou autre en relation avec un système d'accès ou de commande d'un véhicule tandis que le terme de badge sera utilisé pour décrire une forme particulière d'objet portatif intégrant un identifiant.

A cause de l'encombrement des fréquences par de nombreux utilisateurs, souvent dans des applications étrangères à la sécurité de l'habitacle du véhicule, comme les applications de téléphonie ou de signalisation d'alarmes domotiques, les communications radiofréquences sont contraintes par des normes nationales ou internationales à se trouver dans un canal particulier, qui est destiné à tous les utilisateurs n'ayant pas une autre bande réservée. Ce canal libre est défini par une fréquence centrale de 435 MHz en Europe et une largeur de canal déterminée, comme 150 kHz.

Mais, notamment du fait que les réglementations d'occupation du spectre radiofréquence prévoient aussi des limitations de puissance rayonnée, des dispositifs de plus en plus nombreux se voient attribuer le même canal de la réglementation de l'occupation du spectre radiofréquence. Leur rayonnement peut venir interférer avec le canal utilisé par un système d'accès et/ou de démarrage de véhicule utilisant la technique radiofréquence.

Par ailleurs, le véhicule à bord duquel est embarqué un système de contrôle d'accès et/ou de démarrage et, au moins un identifiant portatif, peut aussi comporter d'autres dispositifs ou d'autres fonctions qui nécessitent de communiquer des données de signalisation ou de commande avec un contrôleur embarqué à bord du véhicule - indépendant ou non du système de contrôle des accès et/ou du démarrage visé par l'invention. C'est particulièrement le cas d'un dispositif de surveillance de la pression des pneus qui peut travailler sur le même canal radiofréquence que le système d'accès et/ou de démarrage « mains libres » et interférer avec lui.

Par ailleurs, depuis l'apparition de la technique radiofréquence d'accès et/ou de démarrage au véhicule, le nombre de fonctions confiées ou exécutées par un système d'accès et/ou de démarrage « mains libres » a été augmenté notamment, parce que les situations dans lesquelles on utilise ces fonctions ont également augmenté du fait du nombre croissant de prestations réalisées par le véhicule.

Par ailleurs, plusieurs identifiants portatifs peuvent être validement affectés à un même système d'accès et/ou de démarrage « mains libres ». Il en résulte un risque de collision c'est-à-dire, le risque qu'une trame de données échangées entre un premier identifiant portatif et le système de contrôle embarqué soit perturbée par l'échange avec un autre identifiant portatif.

De plus, le risque de collision de trames de données entre un identifiant portatif et deux systèmes de contrôle embarqués sur des véhicules voisins devient non négligeable. En effet, si au début de la mise sur le marché des systèmes d'accès et/ou de démarrage « mains libres », la probabilité que deux véhicules ainsi équipés soient côte à côte était faible, la généralisation de ce genre de système et d'autres dialoguant dans la même bande de fréquence risque d'élever considérablement la probabilité de cet événement. Il en résulte qu'un identifiant portatif affecté à un premier véhicule peut perturber les communications d'un second véhicule.

Or, les systèmes d'accès et/ou de démarrage « mains libres » de l'état de la technique répondent mal à ces problèmes. Particulièrement, la plupart des dispositifs de l'état de la technique résolvent ce genre de problème par un étalement des trames de données dans le temps, en exploitant des protocoles séquentiels de communications. Or, les possibilités de report dans le temps de l'exécution d'une fonction défaillante à cause de l'un des problèmes précités sont vite limitées, surtout quand certaines fonctions d'accès au véhicule ou à l'une des ressources gérées par le système d'accès et/ou de démarrage « mains libres » exigent un temps de réponse bref.

Le document EP-A-1077301 montre un système de l'état de la technique où on essaie de diminuer le risque de collision des communications entre identifiants et véhicules. Une exploitation des sous canaux en relation aux fonctions d'exploitations n'est pas prévue dans ce système.

Pour ces raisons, la présente invention propose un procédé et un dispositif permettant d'exploiter plusieurs sous-canaux dans un même canal de fréquences de façon à écarter le risque de collision et à favoriser la multiplication des fonctions réalisables dans le cadre d'un système de contrôle d'accès et/ou de démarrage « mains libres » à un véhicule.

En effet, l'invention concerne un procédé d'exploitation d'un système d'accès et/ou de démarrage « mains-libres » pour véhicule du genre comportant au moins un identifiant portatif équipé de moyens de communications radiofréquence et d'un système de contrôle embarqué à bord du véhicule équipé de moyens de communications radiofréquences susceptibles de dialoguer avec les moyens de communication de l'identifiant portatif sur un canal dans au moins une bande de fréquence déterminée, caractérisé en ce qu'il consiste, lors d'une étape d'allocation, à attribuer une pluralité de sous canaux radiofréquences dans ladite bande de fréquence de sorte qu'au moins une fonction d'exploitation du système d'accès et/ou de démarrage « mains libres » puisse être affectée à au moins un sous-canal radiofréquence.

Selon un autre aspect de l'invention, l'étape d'allocation comporte une étape de partage du canal global dans ladite bande de fréquence effectué de manière statique, permanent pendant une période de temps déterminé selon une table ou une fonction prédéterminées d'exécution du partage statique.

Selon un autre aspect de l'invention, l'étape d'allocation comporte une étape de partage du canal global dans ladite bande de fréquence effectué de manière dynamique: variable dans le temps selon une table ou une fonction prédéterminées d'exécution du partage dynamique et/ou par une étape de détermination de l'optimum de bruit radiofréquence sur le canal global.

Selon un autre aspect de l'invention, l'étape d'allocation comporte une étape d'affectation d'une fonction d'exploitation à un sous canal pour au moins une phase particulière de communications, respectivement parmi au moins l'une des phases suivantes : condamnation et décondamnation des ouvrants du véhicule par télécommande, condamnation et décondamnation « Mains Libres » des ouvrants du véhicule, démarrage du groupe motopropulseur, condamnation à l'éloignement des ouvrants du véhicule.

Selon un autre aspect de l'invention, l'étape d'allocation comporte une étape pour indiquer, à l'aide d'un premier canal sur une première bande de fréquences, comme une bande basse fréquence (BF), à l'identifiant portatif la référence du sous canal sur lequel s'effectue ensuite au moins une fonction d'accès et/ou de démarrage dans un second canal sur une seconde bande de fréquences, comme une bande haute fréquence (HF), partagée en sous canaux.

Selon un autre aspect de l'invention, l'étape d'allocation d'un sous canal à une fonction d'exploitation comporte aussi une étape de détection d'un identifiant de l'identifiant portatif et en ce que le contrôle effectué par le système embarqué comporte une étape pour distinguer au moins un premier et un second identifiants portatifs présents simultanément.

Selon un autre aspect de l'invention, lors de l'exécution d'une fonction de détection d'un identifiant oublié à l'intérieur du véhicule lors de l'exécution de condamnation des ouvrants, on alloue des sous canaux à la fonction de condamnation des ouvrants différents pour chacun des identifiants de sorte qu'une stratégie de confirmation de la condamnation soit exécutée selon les identifiants présents à l'intérieur ou à l'extérieur du véhicule.

L'invention concerne aussi un dispositif d'exploitation d'un système d'accès et/ou de démarrage « mains libres » du genre comportant au moins un identifiant portatif radiofréquence et un système de contrôle embarqué à bord du véhicule, caractérisé en ce qu'il comporte des moyens de communications radiofréquences qui comportent des moyens pour affecter au moins une fonction d'exploitation du système d'accès et/ou de démarrage « mains libres » à un sous canal dans une bande de fréquence fi, Dfi déterminée dans un canal radiofréquence global déterminé, comme un canal haute fréquence HF.

Selon un autre aspect de l'invention, les moyens pour affecter au moins une fonction d'exploitation du système d'accès et/ou de démarrage « mains libres » à un sous canal radiofréquence déterminé coopèrent avec des moyens pour émettre une onde d'interrogation vers le moyen de réception sur l'identifiant portatif, les moyens d'affectation des fonctions d'exploitation comportant des moyens pour activer un oscillateur local dont la sortie génère une porteuse appliquée à un seconde entrée correspondante d'une pluralité de modulateur dont chaque première entrée est connectée à une fonction d'exploitation prédéterminée de sorte que les circuits de modulation affectent des sous canaux appartenant au canal global à un amplificateur adaptateur d'impédance.

Selon un autre aspect de l'invention, le dispositif comporte une boucle à verrouillage de phase disposée sur le contrôleur embarqué et sur chacun des identifiants, de sorte que la fréquence centrale de modulation de phase d'une voie d'émission et/ou de démodulation de phase d'une voie de réception soit déterminée en fonction d'un mot de commande appliqué par un microprocesseur associé audit contrôleur et audit identifiant en fonction d'un mécanisme d'allocation de la fonction d'exploitation à exécuter à un sous canal déterminé du canal global de communications, ledit mécanisme étant exécuté sur au moins l'un des microprocesseurs.

Selon un autre aspect de l'invention, le dispositif comporte aussi une voie de communications basse fréquence de sorte qu'un premier mécanisme d'allocation d'un sous canal à une fonction d'exploitation à exécuter à l'étape suivante, exécuté sur un premier microprocesseur, produise un mot de commande transmis par ladite voie de communications basse fréquence au moins à un autre microprocesseur pour qu'il décode le sous canal alloué.

D'autres caractéristiques et avantages de la présente invention seront mieux compris à l'aide de la description et des figures parmi lesquelles :
- la figure 1 représente un système d'accès et/ou de démarrage « mains libres » exploitant une communication multicanaux ;
- la figure 2 représente un plan de répartition des sous-bandes dans un mode particulier de réalisation ;
- la figure 3 représente un schéma caractéristique d'un découpage en sous bande d'un canal ;
- la figure 4 : un mode de réalisation de l'invention avec un badge et un système embarqué à bord d'un véhicule.

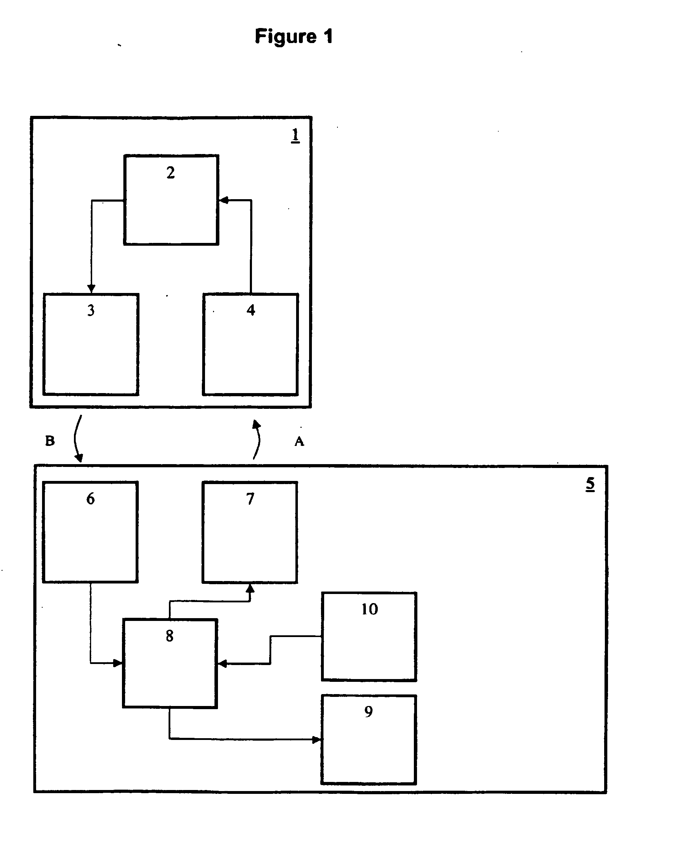

A la figure 1, on a représenté un mode de réalisation du dispositif d'exploitation d'un système d'accès et/ou de démarrage « mains libres » selon l'invention. Le système est essentiellement constitué d'une pluralité de badges 1 associés à un système de contrôle embarqué 5 à bord d'un véhicule déterminé. Chaque badge constitue un identifiant portatif au sens de l'invention. Il peut prendre la forme d'un boîtier équipé d'un bouton de télécommande ou non selon les fonctions exécutables. Particulièrement, lorsque plusieurs véhicules se trouvent côte à côte, l'utilisation de communications radiofréquences sur les mêmes bandes de fréquence introduit un risque de collision entre signaux porteurs d'information issus de plusieurs systèmes de contrôle embarqués à bord de deux ou plus véhicules dont les lobes de rayonnement des antennes radiofréquences se recouvrent.

Chaque badge 1 comporte une source d'alimentation électrique constituée généralement par une pile électrique non représentée, un moyen de communication haute fréquence 3 et un moyen de communication basse fréquence 4 qui sont connectés électriquement à une unité de traitement 2. Dans l'unité de traitement 2, notamment, sont enregistrés :
- un programme permettant d'encoder ou de décoder les données envoyées ou reçues sur l'un ou l'autre des moyens de communication 3 ou 4;
- un programme permettant d'exécuter des opérations sur ces données, opérations parmi lesquels se trouvent le cryptage et/ou le décryptage, l'encodage avec des données de calcul et l'activation de l'émission de nouvelles données sur les moyens de communications 3 ou 4 et le réveil du badge permettant la plus grande partie du temps de placer le badge dans un mode basse consommation électrique ;
- des données permanentes caractérisant l'identifiant du badge et le cas échéant des données de cryptage.

Le système de contrôle embarqué 5 comporte :
- des moyens de communications basse fréquence 7 adaptés avec les moyens de communication basse fréquence 4 de chaque badge qui est associé au système de contrôle embarqué 5 ;
- des moyens de communications haute fréquence 6 adaptés avec les moyens de communication haute fréquence 3 de chaque badge qui est associé au système de contrôle embarqué 5 ;
- un ensemble 9 d'actionneurs comprenant notamment des organes de verrouillage/déverrouillage des ouvrants du véhicule, un organe de démarrage du groupe motopropulseur du véhicule, et des capteurs d'approche 10 comme des capteurs capacitifs, des détecteurs de contact manuel qui agissent sur la fonction d'ouverture des portières et d'autres fonctions du véhicule ;
- une unité de traitement centrale 8 à laquelle est raccordée, par des liaisons convenables, les moyens de communication 6 et 7, et l'ensemble 9 d'actionneurs et de capteurs 10.

Dans l'unité de traitement 8 sont enregistrés notamment :
- des programmes permettant l'encodage et le décodage, et le cas échéant le cryptage et/ou le décryptage de données échangées par les moyens de communications 6 et 7 ;
- des programmes qui, en réponse à des données échangés avec au moins un badge ou en réponse à une donnée élaborée sur la base de l'activation d'un capteur comme un capteur capacitif associé à une poignée de portière, activent ou exécutent des fonctions d'exploitation du système d'accès et/ou de démarrage « mains libres » de l'invention.

Parmi les fonctions d'exploitation du système d'accès et/ou de démarrage « mains-libres » qui sont plus que d'autres susceptibles de subir l'effet du problème à la base de l'invention, à savoir l'encombrement de la bande passante pour résoudre les problèmes de collision de données rencontrés lors de l'exploitation d'un système d'accès et/ou de démarrage « mains libres », on peut citer sans que cela soit limitatif :
- la commande générale d'ouverture et de fermeture des ouvrants du véhicule par télécommande (Remote Keyless Entry) ;
- la commande de décondamnation « Mains Libres » qui intervient quand un porteur du badge reconnu place sa main devant un capteur placé sur une poignée de la portière concernée ;
- la commande de condamnation « Mains Libres » qui intervient quand un porteur du badge reconnu active un actuateur ou une zone spécifique placé sur une poignée de la portière concernée ;
- la commande de démarrage du groupe motopropulseur et de toutes autres fonctions d'activation d'une partie du véhicule qui intervient quand un porteur du badge reconnu active un actuateur généralement sous forme de bouton placé à l'intérieur de l'habitacle
- la fonction de recherche d'un ou plusieurs badges à l'intérieur ou à proximité du véhicule qui intervient notamment à la fermeture du dernier ouvrant du véhicule, précédant ainsi la fonction de scrutation périodique décrite ci-après.
- la fonction de scrutation périodique d'un badge dans une zone prédéterminée qui intervient notamment quand un porteur d'un badge reconnu se trouve à proximité du véhicule.
- la fonction de validation de la disparition du dernier badge d'une zone prédéterminée dite fonction d'anticollision qui déroule une séquence prédéterminée qui se reproduit tant que le système de contrôle embarqué ne retrouve pas un badge reconnu dans la zone de détection ;
- la fonction d'affectation de badge qui permet à un badge reconnu particulier d'être activé par le système de contrôle embarqué parmi un ensemble de badges reconnus et associés au véhicule.

Selon l'invention, la bande passante de communication HF contenue dans le canal de libres communications est découpée en sous canaux lorsque son utilisation risque de présenter des problèmes, comme des problèmes de collision. Préférentiellement, une telle solution est effectuée sur la voie haute fréquence parce que, notamment, la division des fréquences porteuses est techniquement plus facile. Par ailleurs, avec un récepteur bande large, la mesure peut n'être prise que sur le moyen de communication haute fréquence émetteur qui se trouve sur le système de contrôle embarqué 5. Dans ce cas, le récepteur haute fréquence auquel se résume le moyen de communication 3 porté par le badge 1 peut ne pas avoir besoin de reconnaître des canaux haute fréquence distincts, mais être adapté à un seul canal constitué des N sous bandes contiguës ou à tout le moins voisines de la voie d'émission. On permet ainsi de simplifier l'implémentation de l'invention.

Bien entendu, un décodage multi canal peut parfaitement être envisagé avec une augmentation des moyens.

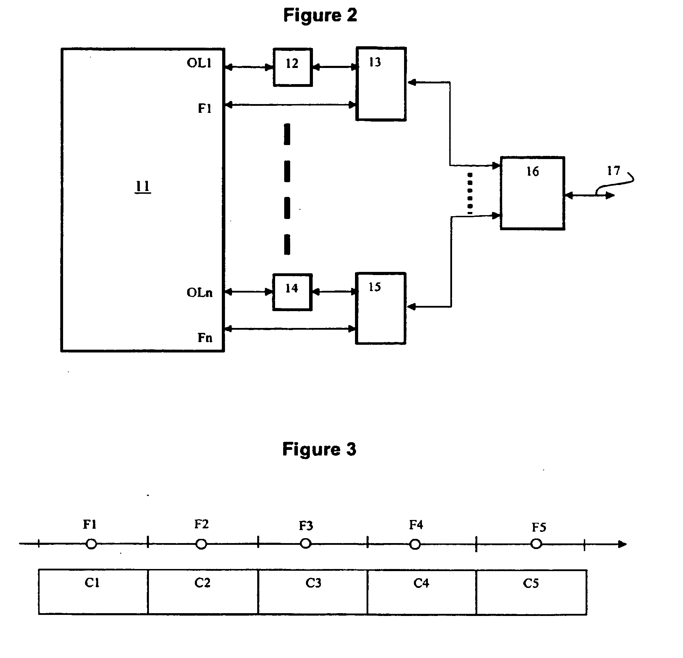

A la figure 2, on a représenté un mode de réalisation d'un moyen selon l'invention permettant d'affecter au moins une fonction d'exploitation du système d'accès et/ou de démarrage « mains libres » à un canal radiofréquence déterminé, dans le domaine des hautes fréquences. Un tel moyen est bien adapté pour faire partie des moyens 7 destinés à émettre une onde d'interrogation A vers le moyen 4 de réception adapté haute fréquence sur le badge 1.

Dans un mode particulier de réalisation, les fonctions qui sont affectées ou allouées à un sous-canal particulier, sont :
- la recherche d'un ou plusieurs badges à l'extérieur du véhicule en vue d'une condamnation ou d'une décondamnation « Mains Libres »;
- la recherche d'un ou plusieurs badges à l'intérieur du véhicule en vue d'une condamnation ou d'une décondamnation « Mains Libres » et de la détection de la présence d'un identifiant;
- la détection d'une requête générale d'ouverture ou de fermeture à distance par télécommande (RKE) ;
- la fonction d'interrogation périodique d'un identifiant dans une zone prédéterminée en vue, soit de la condamnation à l'éloignement des ouvrants du véhicule; soit de la montée des alimentations du véhicule.
- la recherche d'un ou plusieurs badges à l'intérieur ou à proximité du véhicule, recherche qui précède toute fonction d'interrogation périodique décrite précédemment.
- la recherche d'un ou plusieurs badges à l'intérieur du véhicule en vue du démarrage du groupe motopropulseur et de toutes autres fonctions d'activation d'une partie du véhicule ;
- la fonction de validation de la disparition du dernier badge d'une zone prédéterminée dite fonction d'anticollision utilisée notamment lors de la condamnation à l'éloignement des ouvrants du véhicule;

L'allocation d'une fonction d'exploitation est exécutée par un moyen d'allocation d'un sous-canal 11 dont une sortie particulière F1, F2, ..., Fn, si n sous-canaux doivent être répartis, est connectée à l'entrée de modulation d'un circuit de modulation correspondant 13, ...[0030]

Le moyen 11 d'allocation des fonctions d'exploitation comporte ensuite, le cas échéant, une sortie OL1, OL2, ... OLn qui permet d'activer un oscillateur local 12, ..., 14, dont la sortie génère une porteuse appliquée à un seconde entrée correspondante de chaque modulateur 13, ... 15.

Les circuits de modulation permettent ainsi d'affecter des canaux contigus à un amplificateur adaptateur d'impédance 16 qui peut alors alimenter 17 une antenne haute fréquence adaptée à destination de l'antenne réceptrice du badge.

Ainsi qu'on l'a déjà indiqué, le récepteur sur le badge peut être de type bande large et dans ce cas, la proximité ou la contiguïté des canaux assure leur correct décodage par le récepteur sur le badge.

Cependant, pour augmenter la sélectivité, il peut être nécessaire d'affecter des récepteurs adaptés à chaque canal. L'homme de métier saura adapter le schéma de la figure 2 sur un récepteur de badge.

A la figure 3, on a représenté une répartition de cinq canaux contigus dans un canal Haute Fréquence décomposé en sous canaux déterminés par leur fréquence centrale [F1, F5] et de largeur de sous-canal déterminée. Préférentiellement :
- le canal C1 le plus bas est réservé à la fonction de recherche d'un ou plusieurs badges à l'extérieur du véhicule en vue d'une condamnation ou d'une décondamnation « Mains Libres » des ouvrants de véhicule ; puis
- le canal C2 suivant est réservé à la fonction de recherche d'un ou plusieurs badges à l'intérieur du véhicule en vue d'une condamnation ou d'une décondamnation « Mains Libres » des ouvrants du véhicule et de la détection de la présence d'un identifiant; puis
- le canal C3 qui constitue la canal central est réservé à la fonction générale d'ouverture et de fermeture des ouvrants du véhicule par télécommande (Remote Keyless Entry) ; puis
- le canal C4 est réservé pour être communément partagé
   a) par la fonction de recherche d'un badge à l'intérieur du véhicule en vue du démarrage du groupe motopropulseur et de toutes autres fonctions d'activation d'une partie du véhicule, d'une part ;
      et
   b) par la fonction d'interrogation périodique d'un badge dans une zone déterminée en vue soit de la condamnation à l'éloignement des ouvrants du véhicule; soit de la montée des alimentations du véhicule, d'autre part ;
      ce partage étant possible par l'exclusivité des deux groupes de fonctions qui partagent ce sous canal.
      et
- le canal C5 est affecté à deux parties distinctes de la fonction de condamnation à l'éloignement, à savoir,
   a) la fonction de recherche d'un ou plusieurs badges à l'intérieur ou à proximité du véhicule qui intervient notamment à initialisation de la fonction
      et,
   b) la fonction de validation de la disparition du dernier badge d'une zone prédéterminée dite fonction d'anticollision,
      ces fonctions ayant déjà été définies précédemment.

Ainsi avec une telle répartition de fréquences, les risques de collision et donc de perturbation entre deux fonctions sont limités.

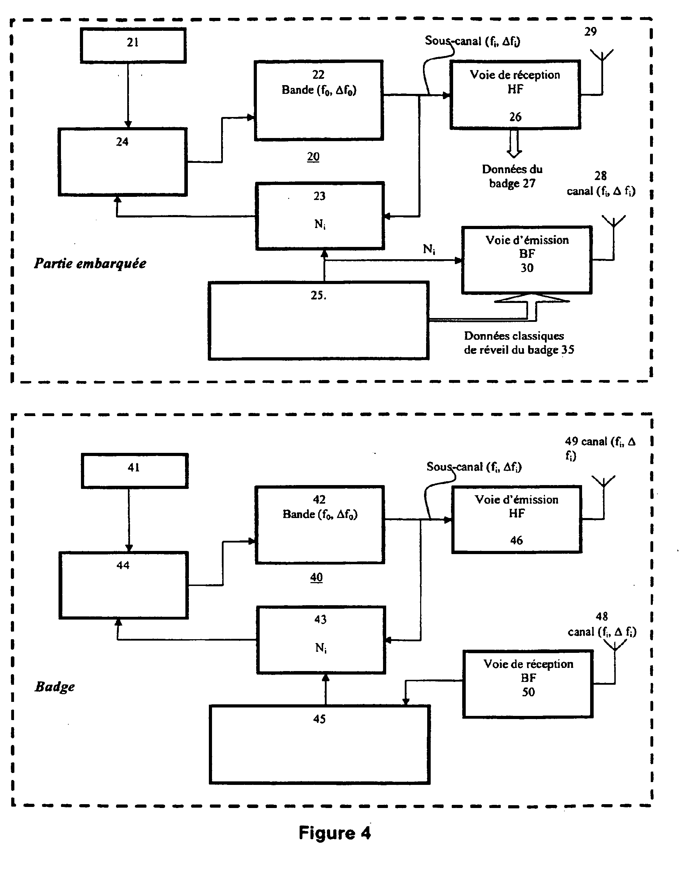

A la figure 4, on a représenté un mode de réalisation de l'invention comportant un badge et un système de contrôle embarqué à bord d'un véhicule. À la figure 4, on a représenté en deux pavés distincts, un mode de réalisation de l'invention adaptée à un système comportant :
- une partie embarquée représentée dans le rectangle supérieur et dans laquelle a été représenté un système de contrôle embarqué d'accès et/ou de démarrage "mains libres" au véhicule ;
- une partie mobile portée par l'utilisateur autorisé, sous forme d'un badge représenté dans le rectangle inférieur.

Pour réaliser le partage du canal haute fréquence en plusieurs bandes de fréquences adaptées à exécuter une ou plusieurs fonctions prédéterminées, le système de l'invention comporte :
- dans la partie embarquée, installée à bord du véhicule, un circuit de synthèse de sous-bandes 20 permettant de déterminer un sous canal de fréquence centrale fi et de largeur de bande Dfi prédéterminée en fonction d'un mot de commande de sélection de bande Ni fourni par un microprocesseur 25.
- dans la partie mobile portée, constituée par le badge, un circuit de synthèse de sous-bandes 40 permettant de déterminer un sous canal de fréquence centrale fi et de largeur de bande Dfi prédéterminée en fonction d'un mot de commande de sélection de bande Ni fourni par un microprocesseur 45.

Chaque circuit de synthèse de sous bande 20, respectivement 40, est constitué sous une forme proche d'un circuit en boucle à verrouillage de phase (PLL). Un quartz 21, respectivement 41, est connecté à une première borne d'entrée d'un circuit de comparaison de phase 24, respectivement 44, produisant une sous bande de fréquence centrale prédéterminée et de largeur de bande prédéterminée. Une borne d'entrée de l'oscillateur local 22, respectivement 42, est connectée à la borne de sortie du comparateur de phases 24, respectivement 44. Une seconde borne d'entrée du comparateur de phase 24, respectivement 44, est connectée à la borne de sortie d'un circuit diviseur de fréquence 23, respectivement 43, dont une première borne d'entrée est connectée à la borne de sortie de l'oscillateur local 22, respectivement 42, de façon à fermer la boucle à verrouillage de phase 20, respectivement 40. Pour déterminer la bande ou sous bande concerné, le circuit diviseur de fréquence 23, respectivement 43, comporte une seconde borne d'entrée, de commande de configuration, qui est connecté au microprocesseur 25, respectivement 45 de façon à recevoir le quotient du diviseur qui sera appliqué à la fréquence appliqué à la première borne d'entrée du diviseur 23, respectivement 43.

Il résulte qu'à la sortie de l'oscillateur local 22, respectivement 42, est déterminé un signal permettant de choisir et de configurer le sous canal en fonction du mot de commande issu du microprocesseur 25, respectivement 45. Le mot de commande est fourni à une borne d'entrée du circuit de réception HF 26 dans la partie embarquée. Le circuit de réception HF 26 est connecté, ainsi qu'il est connu, à une antenne de réception HF 29 dans la partie embarquée à bord du véhicule.

De même, à la sortie de l'oscillateur 42, est déterminé un signal permettant de choisir et de configurer le sous canal en fonction du mot de commande issu du microprocesseur 45, et qui est fourni à une borne d'entrée du circuit d'émission HF 46 dans la partie mobile constituée par le badge. Le circuit d'émission HF 46 est connecté ainsi qu'il est connu à une antenne d'émission 49 HF qui transmet le signal d'information modulé à destination de l'antenne 29 de réception sur la partie embarquée.

Le procédé de l'invention procède de la façon suivante. Dans un premier temps, le contrôleur embarqué sous la commande du microprocesseur 25 produit 35 une donnée activant la voie d'émission BF 30 de façon à générer un signal d'activation ou d'éveil du badge émis par l'intermédiaire de l'antenne 28. Ce signal est ensuite reçu par l'antenne 48 sur le badge et transformé au niveau de la voie de réception BF 50 produisant alors par décodage un message contenant l'identification du sous canal (fᵢ, Δfᵢ) demandé par le mécanisme d'allocation exécuté sur le microprocesseur 25 du contrôleur embarqué sur le véhicule.

Le microprocesseur 45 détermine alors un mot d'adressage à destination d'un diviseur de fréquences 43 qui produit une fréquence centrale fᵢ sur la base de la division par un entier Nᵢ du sous canal alloué à la fonction d'exploitation du système qui va être exécutée. Cette fréquence est appliquée à une entrée du comparateur de phases 44 dont l'autre entrée reçoit l'oscillation générée par un oscillateur de hautes fréquences 41. La boucle de type PLL 40 est refermée sur un oscillateur local qui produit sur sa sortie la fréquence de modulation caractéristique du canal alloué par le mécanisme d'allocation de sous canal. Cette fréquence de modulation est appliquée à une entrée de porteuse de la voie d'émission HF 46 de sorte que le message déterminé par le protocole de communication pour l'exécution de la fonction d'exploitation soit émis par l'antenne HF 49 du badge.

Le message modulé dans le sous canal (fᵢ, Δfᵢ) alloué ainsi qu'il a été déterminé est alors reçu sur l'antenne HF 29 de la partie embarquée sur le contrôleur du véhicule. Le signal est alors démodulé sur la voie de réception HF 26 du badge qui synthétise alors le message sous forme de données du badge à destination du microcontrôleur 25.

D'une manière générale, le procédé de l'invention comporte une étape principale qui consiste à allouer un sous canal à une fonction d'exploitation du système d'accès et/ou de démarrage « mains libres » de manière à résoudre au moins partiellement :
- le problème des interférences locales subies par un système composé d'au moins un identifiant et d'un contrôleur embarqué à bord du véhicule et provoqué par un système émetteur de radiofréquences non désiré ;
- le problème des collisions des trames d'information entre deux systèmes, chacun composé d'au moins un identifiant et d'un contrôleur embarqué à bord d'un premier et d'un second véhicule, particulièrement quand les deux systèmes présentent une zone commune de recouvrement haute fréquence HF ;
- le problème des collisions des trames d'information entre deux systèmes émettant et/ou recevant dans le même canal global, le premier étant constitué par un système d'accès et/ou de démarrage « mains libres » et le second système étant constitué par un autre système différent mais fonctionnant sur le même canal global comme un système de surveillance de pression des pneus du même véhicule.

Pour résoudre ces problèmes, l'invention propose d'exécuter, avec des moyens déjà détaillés, un partage et/ou une allocation du canal global occupé par le système d'accès et/ou de démarrage « mains libres » qui soit effectué de manière :
- statique ;
   ou
- dynamique.

Le partage du canal global dans ladite bande de fréquence est effectué de manière statique, quand il est rendu permanent pendant une période de temps déterminé. Cette période peut être celle de la durée de vie du véhicule, ou des périodes de cette durée de vie et le partage et/ou l'allocation des sous canaux du canal global est effectué selon une table ou une fonction prédéterminées d'exécution du partage statique.

Dans un mode particulier de réalisation, le procédé de l'invention consiste à effectuer un partage statique du plan des sous-canaux qui dépendent du véhicule sur lequel le système d'accès et/ou de démarrage est installé. Par exemple, une fonction d'exploitation F1 qui est affectée à un sous canal C1 pour un véhicule A sera affectée à un autre sous canal (C4 par exemple) sur un véhicule B, de sorte que si les deux véhicules A et B se retrouvent à proximité l'un de l'autre, l'activation de la fonction F1 pour le véhicule A ait une probabilité réduite d'affecter le système de contrôle d'accès ou de commande du véhicule B et réciproquement.

Une étape pour affecter statiquement un sous-canal à une fonction d'exploitation F1 parmi N sous-canaux disponibles consiste :
- à utiliser un identifiant numérique propre INPX au véhicule comme un numéro de châssis ; puis
- à exécuter le calcul du reste de la division de l'identifiant numérique propre INPX par N-1 de façon à réserver un canal déterminé fixe à la fonction d'ouverture générale des ouvrants du véhicule (Remote Keyless Entry); puis
- décrémenter de une unité N et enfin
- à recommencer le processus jusqu'à ce que l'ensemble des sous canaux ait été affecté aux fonctions d'exploitation prévues.

Le partage du canal global dans ladite bande de fréquence est effectué de manière dynamique quand il est rendu variable dans le temps. Cette évolution dans le temps est exécutée selon une table ou une fonction prédéterminées d'exécution du partage dynamique. Dans ce cas, en fonction d'événements prédéterminés, le système d'accès et/ou de démarrage « mains libres » par exemple à l'aide du microprocesseur 25 du contrôleur embarqué à bord du véhicule :
- lit une table enregistrée dont l'adressage est effectué en fonction de la détection de l'événement ; ou
- exécute une fonction dont l'argument est détecté sur la base de la détection de l'événement.

Dans une autre variante, au lieu d'utiliser une table ou une fonction, ou en combinaison avec ce moyen, le système d'accès et/ou de démarrage « mains libres » exécute une étape de détermination du minimum de bruit radiofréquence sur le canal global. A cette fin, hors d'une période d'émission de la porteuse HF, l'un des microprocesseurs au moins exécute une mesure de la tension de détection sur la voie de réception Haute Fréquence 26 et en déduit un niveau de bruit pour chaque sous canal possible. L'allocation du sous canal à une fonction est alors déterminée sur la base, non nécessairement exclusive, du minimum de bruit détecté.

Quel que soit le lieu d'exécution du mécanisme d'allocation de sous canaux dans le canal global, un mode de réalisation du procédé de l'invention consiste à indiquer à l'identifiant à l'aide d'un premier canal sur une première bande de fréquences, comme une bande basse fréquence (BF), la référence du sous canal sur lequel s'effectue ensuite la fonction dans un second canal sur une seconde bande de haute fréquence (HF) partagée en sous canaux.

L'invention permet aussi de résoudre de nombreux problèmes que l'on s'est déjà posés dans l'état de la technique et auxquels on a souvent apporté des solutions séquentielles. L'invention apporte l'avantage d'offrir aussi, en addition ou séparément avec ces techniques séquentielles dans le temps, une technique de différentiation des protocoles de transmission dans le plan fréquentiel tout en respectant la réglementation sur le canal global, sa fréquence centrale et sa largeur. Particulièrement, l'étape d'allocation d'un sous canal à une fonction d'exploitation comporte aussi une étape de détection d'un identifiant. Dans ce cas, le procédé de l'invention comporte aussi une étape de contrôle effectué par le système embarqué. Le procédé de l'invention comporte aussi une étape pour distinguer au moins un premier et un second identifiants présents simultanément.

Particulièrement, lors de l'exécution d'une fonction de détection d'identifiant oublié à l'intérieur du véhicule lors de l'exécution de condamnation des ouvrants, le procédé de l'invention, dans un mode de réalisation, consiste à allouer des sous canaux différents à la fonction de recherche d'identifiant à l'intérieur du véhicule pour chacun des identifiants de sorte qu'une stratégie de confirmation de la condamnation soit exécutée selon les identifiants présents à l'intérieur ou à l'extérieur du véhicule.

Dans un autre mode de réalisation du procédé de l'invention, l'étape d'allocation d'un sous canal dans le canal global exploité par le système composé d'au moins un identifiant et d'un contrôleur embarqué à bord du véhicule est précédée d'une étape de détection de la présence d'un autre système. Un tel système est composé d'au moins un identifiant et/ou d'un contrôleur embarqué à bord d'un autre véhicule. Quand un tel second ou autre système est détecté, le procédé de l'invention comporte une étape pour empêcher la collision entre les deux systèmes. Préférentiellement, cet empêchement de la collision est exécuté par une différenciation de l'allocation des sous canaux du canal global.

Dans un autre mode de réalisation du procédé de l'invention, l'étape d'allocation d'un sous canal dans le canal global exploité par le système composé d'un identifiant et d'un contrôleur embarqué à bord du véhicule évolue dans le temps selon un plan fréquentiel établi de manière pseudo aléatoire. L'homme de métier connaît déjà des systèmes d'accès et/ou de démarrage « mains libres » qui évoluent de manière pseudo aléatoire, les codes caractérisant l'identifiant du badge et du contrôleur embarqué évoluant dans le temps selon des tables cycliques. Dans ce mode de réalisation du procédé de l'invention, une évolution du plan de partage des sous canaux et/ou des allocations des fonctions d'exploitation est exécutée de manière évolutive entre l'identifiant et le contrôleur de sorte que l'écoute du plan de fréquences occupées à la date t par un tiers non autorisé, dénommé également pirate, ne lui serve à rien à une date ultérieure. Ainsi, le piratage par écoute des sous canaux à une date arbitraire est rendu impossible par l'évolution de ladite allocation des sous canaux et/ou des fonctions d'exploitation à ces dits sous canaux. Dans un mode particulier de réalisation, l'évolution du plan de partage est effectuée par rotation de l'adressage d'une table cyclique comportant une succession pseudo aléatoire de fréquences centrales et, le cas échéant de largeurs de bande, des sous canaux, et/ou d'une succession de fonctions d'exploitation attribuées à chacun des dits sous canaux ainsi déterminés.

Dans un mode particulier de réalisation du procédé de l'invention, l'étape d'allocation d'un sous-canal comporte aussi une étape pour affecter un degré de priorité à au moins une fonction parmi une pluralité de fonctions de façon à protéger les fonctions d'un même sous canal de subir des interférences. Par exemple, la fonction prioritaire peut être la fonction de surveillance de la pression des pneus en roulage ou la fonction de décondamnation mains-libres des ouvrants lorsque le véhicule est à l'arrêt.

Dans un mode particulier de réalisation du dispositif de mise en oeuvre du procédé de l'invention, la voie haute fréquence de l'identifiant 1 comporte un récepteur bande large.

Dans un mode particulier de réalisation du dispositif de l'invention, le mécanisme d'allocation coopère avec des moyens pour effectuer la répartition de cinq canaux contigus dans une bande de fréquences [F0, F4] des hautes fréquences parmi lesquels :
- le canal C1 le plus bas est réservé à la fonction de recherche d'un ou plusieurs identifiants à l'extérieur du véhicule en vue d'une condamnation ou d'une décondamnation « Mains Libres » des ouvrants de véhicule ; puis
- le canal C2 suivant est réservé à la fonction de recherche d'un ou plusieurs identifiants à l'intérieur du véhicule en vue d'une condamnation ou d'une décondamnation « Mains Libres » des ouvrants du véhicule ; puis,
- le canal C3 suivant est réservé à la fonction d'ouverture et de fermeture générale des ouvrants du véhicule par télécommande (Remote Keyless Entry) ; puis
- le canaux C4 est communément partagé par la fonction de recherche d'un identifiant à l'intérieur du véhicule en vue du démarrage du groupe motopropulseur et de toutes autres fonctions d'activation d'une partie du véhicule, d'une part ; et par la fonction d'interrogation périodique d'un identifiant dans une zone déterminée en vue, soit de la condamnation à l'éloignement des ouvrants du véhicule; soit de la montée des alimentations du véhicule, d'autre part ;
   et ;
- le canal C5 est affecté à deux parties distinctes de la fonction de condamnation à l'éloignement des ouvrants du véhicule, à savoir la fonction de recherche d'un ou plusieurs identifiant à l'intérieur ou à proximité du véhicule qui intervient notamment à initialisation de la fonction et la fonction de validation de la disparition du dernier identifiant d'une zone prédéterminée dite fonction d'anticollision.

## Revendications

1. Procédé d'exploitation d'un système d'accès et/ou de démarrage « mains-libres » pour véhicule du genre comportant au moins un identifiant portatif (1) équipé de moyens (3, 4) de communications radiofréquence et d'un système de contrôle (5) embarqué à bord du véhicule équipé de moyens (6, 7) de communications radiofréquences susceptibles de dialoguer avec les moyens de communication de l'identifiant portatif sur un canal dans au moins une bande de fréquence déterminée, **caractérisé en ce qu'**il consiste, lors d'une étape d'allocation, à attribuer une pluralité de sous canaux radiofréquences dans ladite bande de fréquences de sorte que chaque fonction d'exploitation du système d'accès et/ou de démarrage « mains libres » puisse être affectée à au moins un sous canal radiofréquence, l'attribution des sous canaux radiofréquences étant différente d'un système de contrôle (5) ou d'un identifiant portatif (1) à l'autre.

2. Procédé selon la revendication 1, **caractérisé en ce que** l'étape d'allocation comporte une étape de partage du canal global dans ladite bande de fréquence effectué de manière statique, permanent pendant une période de temps déterminé selon une table ou une fonction prédéterminées d'exécution du partage statique.

3. Procédé selon la revendication 1, **caractérisé en ce que** l'étape d'allocation comporte une étape de partage du canal global dans ladite bande de fréquence effectué de manière dynamique : variable dans le temps selon une table ou une fonction prédéterminées d'exécution du partage dynamique et/ou par une étape de détermination du niveau de bruit radiofréquence sur le canal global.

4. Procédé selon l'une quelconque des revendications précédentes, **caractérisé en ce** l'étape d'allocation comporte une étape d'affectation d'une fonction d'exploitation à un sous canal pour au moins une phase particulière de communications, respectivement parmi au moins l'une des phases suivantes : condamnation et décondamnation des ouvrants du véhicule par télécommande, condamnation et décondamnation « Mains Libres » des ouvrants du véhicule, démarrage du groupe motopropulseur, condamnation à l'éloignement des ouvrants du véhicule.

5. Procédé selon l'une quelconque des revendications précédentes, **caractérisé en ce que** l'étape d'allocation comporte une étape pour affecter un degré de priorité à au moins une fonction parmi une pluralité de fonctions de façon à protéger les fonctions d'un même sous canal de subir des interférences

6. Procédé selon l'une quelconque des revendications précédentes, **caractérisé en ce que** l'étape d'allocation comporte une étape pour indiquer, à l'aide d'un premier canal sur une première bande de fréquences, comme une bande basse fréquence (BF), à l'identifiant portatif la référence du sous canal sur lequel s'effectue ensuite au moins une fonction d'accès et/ou de démarrage dans un second canal sur une seconde bande de fréquences, comme une bande haute fréquence (HF), partagée en sous canaux.

7. Procédé selon l'une des revendications précédentes, **caractérisé en ce que** l'étape d'allocation d'un sous canal à une fonction d'exploitation comporte aussi une étape de détection d'un identifiant de l'identifiant portatif et **en ce que** le contrôle effectué par le système embarqué comporte une étape pour distinguer au moins un premier et un second identifiants portatifs présents simultanément.

8. Procédé selon la revendication 7, **caractérisé en ce qu'**il consiste, lors de l'exécution d'une fonction de détection d'identifiant oublié à l'intérieur du véhicule lors de l'exécution de condamnation des ouvrants, à allouer des sous canaux à la fonction de condamnation des ouvrants différents pour chacun des identifiants de sortie qu'une stratégie de confirmation de la condamnation soit exécutée selon les identifiants présents à l'intérieur ou à l'extérieur du véhicule.

9. Dispositif d'exploitation d'un système d'accès et/ou de démarrage « mains libres » du genre comportant au moins un identifiant portatif radiofréquence (1) et un système de contrôle (5) embarqué à bord du véhicule, **caractérisé en ce qu'**il comporte des moyens de communications radiofréquences (3, 4, 6, 7) qui comportent des moyens (11 - 17) pour affecter différentes fonctions d'exploitation du système d'accès et/ou de démarrage « mains libres » à un sous canal dans une bande de fréquence (fi, Δfi) déterminée dans un canal radiofréquence global déterminé, comme un canal haute fréquence (HF), de sorte qu'à un même sous canal puissent être affectées plusieurs fonctions d'exploitation.

10. Dispositif selon la revendication 9, **caractérisé en ce que** les moyens (11) pour affecter au moins une fonction d'exploitation du système d'accès et/ou de démarrage « mains libres » à un sous canal radiofréquence déterminé, coopèrent avec des moyens (7) pour émettre une onde d'interrogation A vers le moyen (4) de réception sur l'identifiant (1), les moyens (11) d'affectation des fonctions d'exploitation comportant des moyens pour activer un oscillateur local (12, ..., 14) dont la sortie génère une porteuse appliquée à un seconde entrée correspondante d'une pluralité de modulateurs (13, ... 15) dont chaque première entrée est connectée à une fonction d'exploitation prédéterminée de sorte que les circuits de modulation affectent des sous canaux appartenant au canal global à un amplificateur adaptateur d'impédance (16).

11. Dispositif selon l'une des revendications 9 ou 10, **caractérisé en ce qu'**il comporte une boucle à verrouillage de phase (20, 40) disposé sur le contrôleur embarqué et sur chacun des identifiants, de sorte que la fréquence centrale de modulation de phase d'une voie d'émission (46) et/ou de démodulation de phase d'une voie de réception (26) soit déterminée en fonction d'un mot de commande appliqué par un microprocesseur (45, 25) associé audit contrôleur et audit identifiant en fonction d'un mécanisme d'allocation de la fonction d'exploitation à exécuter à un sous canal déterminé du canal global de communications, ledit mécanisme étant exécuté sur au moins l'un des microprocesseurs (25, 45).

12. Dispositif selon la revendication 11, **caractérisé en ce qu'**il comporte aussi une voie de communications basse fréquence (30, 50) de sorte qu'un premier mécanisme d'allocation d'un sous canal à une fonction d'exploitation à exécuter ultérieurement, exécuté sur un premier microprocesseur (25 ou 45), produise un mot de commande (Ni) transmis par ladite voie de communications basse fréquence (30 ou 50) au moins à un autre microprocesseur (45 ou 25) pour qu'il décode le sous canal alloué.

## Claims

1. Method for operating a "hands-free" entry and/or starting system for a vehicle of the type comprising at least one portable identifier (1) fitted with radiofrequency communication means (3, 4) and with a control system (5) onboard the vehicle fitted with radiofrequency communication means (6, 7) capable of communicating with the communication means of the portable identifier over a channel in at least one determined frequency band, **characterized in that** it consists, during an allocation step, in allocating a plurality of radiofrequency sub-channels in the said frequency band so that each operating function of the "hands-free" entry and/or starting system can be assigned to at least one radiofrequency sub-channel, the allocation of the radiofrequency sub-channels being different from one control system (5) or from one portable identifier (1) to the other.

2. Method according to Claim 1, **characterized in that** the allocation step comprises a step of sharing of the overall channel in the said frequency band carried out in a static manner, that is permanent for a determined period of time according to a table or a predetermined function of execution of the static sharing.

3. Method according to Claim 1, **characterized in that** the allocation step comprises a step of sharing of the overall channel in the said frequency band carried out in a dynamic manner: variable over time according to a table or a predetermined function for execution of the dynamic sharing and/or by a step of determining the radiofrequency noise level on the overall channel.

4. Method according to any one of the preceding claims, **characterized in that** the allocation step comprises a step of assigning an operating function to a sub-channel for at least one particular communication phase, respectively amongst at least one of the following phases: double locking and double unlocking the openings of the vehicle by remote control, "hands-free" double locking and double unlocking the openings of the vehicle, starting the drive train, double locking the openings of the vehicle at a distance.

5. Method according to any one of the preceding claims, **characterized in that** the allocation step comprises a step for assigning a degree of priority to at least one function amongst a plurality of functions in order to protect the functions of one and the same sub-channel from sustaining interference.

6. Method according to any one of the preceding claims, **characterized in that** the allocation step comprises a step for indicating, with the aid of a first channel on a first frequency band, such as a low-frequency (LF) band, to the portable identifier the reference of the sub-channel on which is subsequently carried out at least one entry and/or starting function in a second channel on a second frequency band, such as a high-frequency (HF) band, shared as sub-channels.

7. Method according to one of the preceding claims, **characterized in that** the step of allocating a sub-channel to an operating function also comprises a step of detecting an identifier of the portable identifier and **in that** the control carried out by the on-board system comprising a step for distinguishing at least one first and one second portable identifier simultaneously present.

8. Method according to Claim 7, **characterized in that** it consists, during the execution of a function of detecting an identifier forgotten inside the vehicle during the execution of double locking the openings, in allocating sub-channels to the function for double locking different openings for each of the identifiers so that a confirmation strategy of the double locking is executed depending on the identifiers that are present inside or outside the vehicle.

9. Device for operating a "hands-free" entry and/or starting system of the type comprising at least one portable radiofrequency identifier (1) and one control system (5) onboard the vehicle, **characterized in that** it comprises radiofrequency communication means (3, 4, 6, 7) which comprise means (11 - 17) for assigning various operating functions of the "hands-free" entry and/or starting system to a sub-channel in a determined frequency band (fi, Δfi) in a determined overall radiofrequency channel, such as a high-frequency (HF) channel, so that several operating functions can be assigned to one and the same sub-channel.

10. Device according to Claim 9, **characterized in that** the means (11) for assigning at least one operating function of the "hands-free" entry and/or starting system to a determined radiofrequency sub-channel interact with means (7) for transmitting an interrogation wave A to the reception means (4) on the identifier (1), the means (11) for assigning operating functions comprising means for activating a local oscillator (12, ..., 14) the output of which generates a carrier signal applied to a second corresponding input of a plurality of modulators (13, ..., 15) each first input of which is connected to a predetermined operating function so that the modulation circuits assign sub-channels belonging to the overall channel to an impedance-matching amplifier (16).

11. Device according to either of Claims 9 and 10, **characterized in that** it comprises a phase locked loop (20, 40) placed on the on-board controller and on each of the identifiers, so that the central frequency of phase modulation of a transmit channel (46) and/or of phase demodulation of a receive channel (26) is determined as a function of a control word applied by a microprocessor (45, 25) associated with the said controller and with the said identifier according to a mechanism for allocating the operating function to be executed to a determined sub-channel of the overall communication channel, the said mechanism being executed on at least one of the microprocessors (25, 45).

12. Device according to Claim 11, **characterized in that** it also comprises a low-frequency communication channel (30, 50) so that a first mechanism for allocating a sub-channel to an operating function to be executed subsequently, executed on a first microprocessor (25 or 45), produces a control word (Ni) transmitted via the said low-frequency communication channel (30 or 50) at least to another microprocessor (45 or 25) so that it decodes the allocated sub-channel.

## Patentansprüche

1. Verfahren zum Betrieb eines freihändigen Zugangs-und/oder Startsystems für Fahrzeuge der Art, die mindestens eine tragbare Kennung (1), die mit Funkfrequenz-Kommunikationsmitteln (3, 4) ausgestattet ist, und ein an Bord des Fahrzeugs mitgeführtes Steuersystem (5) aufweist, das mit Funkkommunikationsmitteln (6, 7) ausgestattet ist, die mit den Kommunikationsmitteln der tragbaren Kennung auf einem Kanal in mindestens einem bestimmten Frequenzband kommunizieren können, **dadurch gekennzeichnet, dass** es bei einem Zuordnungsschritt im Zuweisen mehrerer Funkfrequenz-Unterkanäle in dem Frequenzband besteht, derart, dass jede Betriebsfunktion des freihändigen Zugangs- und/oder Startsystems mindestens einem Funkfrequenz-Unterkanal zugeteilt werden kann, wobei die Zuweisung der Funkfrequenz-Unterkanäle sich von einem Steuersystem (5) oder einer tragbaren Kennung (1) zum/zur anderen unterscheidet.

2. Verfahren nach Anspruch 1, **dadurch gekennzeichnet, dass** der Zuordnungsschritt einen Schritt der Aufteilung des Gesamtkanals in dem Frequenzband aufweist, der während eines bestimmten Zeitraums auf statische, dauerhafte Weise gemäß einer vorbestimmten Tabelle oder Funktion zur Ausführung der statischen Aufteilung vorgenommen wird.

3. Verfahren nach Anspruch 1, **dadurch gekennzeichnet, dass** der Zuordnungsschritt einen Schritt der Aufteilung des Gesamtkanals in dem Frequenzband aufweist, der auf dynamische, über die Zeit veränderliche Weise gemäß einer vorbestimmten Tabelle oder Funktion zur Ausführung der dynamischen Aufteilung und/oder durch einen Schritt zur Bestimmung des Funkfrequenz-Rauschpegels auf dem Gesamtkanal vorgenommen wird.

4. Verfahren nach einem der vorhergehenden Ansprüche, **dadurch gekennzeichnet, dass** der Zuordnungsschritt einen Schritt der Zuteilung einer Betriebsfunktion zu einem Unterkanal für mindestens eine bestimmte Phase von Kommunikationen unter jeweils mindestens einer der folgenden Phasen aufweist: Verriegelung und Entriegelung der Türflügel des Fahrzeugs durch Fernsteuerung, freihändige Verriegelung und Entriegelung der Türflügel des Fahrzeugs, Start des Antriebsaggregats, Verriegelung bei der Entfernung der Türflügel des Fahrzeugs.

5. Verfahren nach einem der vorhergehenden Ansprüche, **dadurch gekennzeichnet, dass** der Zuordnungsschritt einen Schritt zum Zuteilen einer Vorrangstufe zu mindestens einer Funktion unter mehreren Funktionen aufweist, derart, dass die Funktionen eines selben Unterkanals vor dem Erleiden von Störungen geschützt werden.

6. Verfahren nach einem der vorhergehenden Ansprüche, **dadurch gekennzeichnet, dass** der Zuordnungsschritt einen Schritt aufweist, um mittels eines ersten Kanals auf einem ersten Frequenzband, wie ein Niederfrequenzband (NF), der tragbaren Kennung die Referenz des Unterkanals anzugeben, auf dem dann mindestens eine Zugangs- und/oder Startfunktion in einem zweiten Kanal auf einem zweiten, in Unterkanäle aufgeteilten Frequenzband, wie einem Hochfrequenzband (HF), vorgenommen wird.

7. Verfahren nach einem der vorhergehenden Ansprüche, **dadurch gekennzeichnet, dass** der Zuordnungsschritt eines Unterkanals zu einer Betriebsfunktion auch einen Schritt der Ermittlung einer Kennung der tragbaren Kennung aufweist, und **dadurch**, dass die durch das mitgeführte System vorgenommene Steuerung einen Schritt zum Unterscheiden mindestens einer ersten und einer zweiten tragbaren Kennung aufweist, die gleichzeitig vorhanden sind.

8. Verfahren nach Anspruch 7, **dadurch gekennzeichnet, dass** es bei der Ausführung einer Funktion zur Ermittlung einer im Innenraum des Fahrzeugs vergessenen Kennung bei der Ausführung der Verriegelung der Türflügel aus dem Zuordnen von Unterkanälen zur Verriegelungsfunktion der Türflügel besteht, die sich für jede der Kennungen unterscheiden, derart, dass eine Strategie zur Bestätigung der Verriegelung gemäß den im Innenraum oder außerhalb des Fahrzeugs vorhandenen Kennungen ausgeführt wird.

9. Einrichtung zum Betrieb eines freihändigen Zugangs- und/oder Startsystems der Art, die mindestens eine tragbare Funkfrequenzkennung (1) und ein an Bord des Fahrzeugs mitgeführtes Steuersystem (5) aufweist, **dadurch gekennzeichnet, dass** sie Funkfrequenz-Kommunikationsmittel (3, 4, 6, 7) aufweist, die Mittel (11 bis 17) zum Zuteilen verschiedener Betriebsfunktionen des freihändigen Zugangs- und/oder Startsystems zu einem Unterkanal in einem bestimmten Frequenzband (fi, Δfi) in einem bestimmten Gesamtfunkfrequenzkanal, wie ein Hochfrequenzkanal (HF), aufweisen, derart, dass einem selben Unterkanal mehrere Betriebsfunktionen zugeteilt werden können.

10. Einrichtung nach Anspruch 9, **dadurch gekennzeichnet, dass** die Mittel (11) zum Zuteilen mindestens einer Betriebsfunktion des freihändigen Zugangs- und/oder Startsystems zu einem bestimmten Funkfrequenz-Unterkanal mit Mitteln (7) zum Senden einer Abfragewelle A zum Empfangsmittel (4) auf der Kennung (1) zusammenwirken, wobei die Mittel (11) zur Zuteilung der Betriebsfunktionen Mittel zum Aktivieren eines Lokaloszillators (12, ..., 14) aufweisen, dessen Ausgang eine Trägerfrequenz erzeugt, die an einen entsprechenden Eingang mehrerer Modulatoren (13, ..., 15) angelegt wird, von denen jeder erste Eingang mit einer vorbestimmten Betriebsfunktion verbunden ist, derart, dass die Modulationsschaltungen einem Impedanzanpassungsverstärker (16) Unterkanäle zuteilen, die zum Gesamtkanal gehören.

11. Einrichtung nach einem der Ansprüche 9 oder 10, **dadurch gekennzeichnet, dass** sie einen Phasenregelkreis (20, 40) aufweist, der auf dem mitgeführten Steuergerät und auf jeder der Kennungen angeordnet ist, derart, dass die Phasenmodulationsmittenfrequenz eines Sendewegs (46) und/oder die Phasendemodulationsmittenfrequenz eines Empfangswegs (26) in Abhängigkeit von einem Steuerwort bestimmt wird, das durch einen dem Steuergerät und der Kennung zugehörigen Mikroprozessor (45, 25) in Abhängigkeit von einem Zuordnungsmechanismus der auszuführenden Betriebsfunktion an einen bestimmten Unterkanal des Gesamtkommunikationskanals angelegt wird, wobei der Mechanismus auf mindestens einem der Mikroprozessoren (25, 45) ausgeführt wird.

12. Einrichtung nach Anspruch 11, **dadurch gekennzeichnet, dass** sie auch einen Niederfrequenz-Kommunikationsweg (30, 50) aufweist, derart, dass ein erster Zuordnungsmechanismus eines Unterkanals zu einer später auszuführenden Betriebsfunktion, der auf einem ersten Mikroprozessor (25 oder 45) ausgeführt wird, ein Steuerwort (Ni) erzeugt, das durch den Niederfrequenz-Kommunikationsweg (30 oder 50) zu mindestens einem anderen Mikroprozessor (45 oder 25) übermittelt wird, damit er den zugeordneten Unterkanal decodiert.
